# EUROPEAN PATENT APPLICATION

(11) **EP 3 603 757 A1**
(43) Date of publication of application: **05.02.2020**
(21) Application number: 18187032.0
(22) Date of filing: 02.08.2018
(51) Int. Cl.: A63B 55/60, B62B 3/02, B62B 3/10, B62B 3/12, A63B 55/53, A63B 55/57, A63B 55/00

(54) **GOLF BAG**

(71) Applicant: Hild & Sons GmbH, 63533 Mainhausen (DE)
(72) Inventor: Hild, Horst, 63533 Mainhausen (DE); Hild, Sven, 64500 Seligenstadt (DE); Hild, Nils, 63533 Mainhausen (DE)
(74) Representative: Keil & Schaafhausen Patent- und Rechtsanwälte PartGmbB

(57) **Abstract**

The invention relates to a golf bag having a rigid basis bag (100) with an upper base plane (101), a lower base plane (102) and elongated side planes (103), wherein the lower base plane (102) is closed and the upper base plane (103) has several openings (106) for inserting the stems (91) of golf clubs (90). One of the side planes (103), labeled as the mounting plane (104), has a mounting support (108) on its surface for engaging a golf bag mount (311) of a golf trolley (300) thereby attaching the basis bag (100) to the golf trolley (300). The basis bag (100) comprises a support linkage (110) pivotally mounted to the mounting plane (104) at the upper end of the mounting plane (104) adjacent to the upper base plate (101) and extending along the longer side of the mounting plane (104), wherein the support linkage (110) can be folded down from the mounting plane (104) to a limit stop, the support linkage (110) and the mounting plane (104) then forming a triangle.

## Description

The invention relates to a golf bag for carrying golf clubs.

Usually, golf bags have a certain predefined form and functionality. These known golf bags are provided for a certain number of golf clubs and other equipment and cannot be adapted to certain situations in which the user wants to carry more or less golf clubs, or more or less other golf equipment.

These known golf bags may be attached to a golf trolley thus being a golf bag with a golf trolley. The trolley is usually used to carry the golf bags more comfortably on the golf course during a game of golf. However, fixing the golf bag to the trolley is often laborious and troublesome. The golf bag often twists in the golf bag mount of the golf trolley, and during transport, the golf bag and the golf trolley are normally separated from each other. This is in particular valid for a transport in airplane, in train or even in car. The result is that the golf trolley being a part of the golf bag is often not taken along, as it requires additional space for the transport and as reattachment of the bag is troublesome.

Further, the form and the size of the golf bags are normally strictly specified, and it is not possible to adapt the golf bag flexibly to the respective wishes and circumstances.

It is accordingly an object of the present invention to propose a golf bag that can be easily and quickly adapted to the respective requirements, that is stable and can be transported easily while being attached to the golf trolley without the need for excessive storage space.

This object is solved by a golf bag having the features of claim 1. Further advantageous features in line with the proposed golf bag are described in the dependent claims.

The proposed golf bag according to the invention has a rigid basis bag with a basically rectangular upper and lower base plane and four elongated side planes, wherein the lower base plane is closed and the upper base plane has several, in particular circular, openings for inserting the stems of golf clubs. The stems of the golf clubs are hold in tubes integrated in the rigid basis bag and extending from the (circular) openings.

In order to have a handsome basic shape, the basis bag may have a quadratic base form allowing insertion of about up to 4 or 8, for example 6, golf clubs. This basis bag may serve as the smallest entity of a golf bag according to the invention, without further modules attached to it.

One of the side planes, labeled as the mounting plane, has a mounting support on its surface for engaging a golf bag mount of a golf trolley thereby attaching the basis bag to the golf trolley. The mounting support is positioned in the center of the mounting plane with respect to the smaller extension of the mounting plane according to a preferred embodiment (i.e. in the direction of the smaller or shorter side of the mounting plane. This plane may be described also by being perpendicular to a stem of the golf club inserted into the basis bag). In such an arrangement, it is avoided that the basic bag will tend to turn in the mount of the golf trolley as the trolley mount essentially engages the center of gravity of the basis bag of the golf bag (with respect to turning the golf bag in a plane parallel to the mounting plane).

Additionally, the basis bag comprises a support linkage pivotally mounted to the mounting plane at the upper end of the mounting plane. In particular, the support linkage is mounted (using a support linkage joint for pivotally mounting) adjacent to the upper base plate and is extending along the larger extension (i.e. the length or longer side) of the (elongated) mounting plane. The support linkage has a free end not outstanding over the basis bag when the support linkage is folded onto the mounting plane. This ensures that the basis bag can be placed on the ground (if detached from a golf trolley, for example) without the support linkage hitting the ground. Accordingly, the support linkage does not destabilize the basis bag placed on the ground even when the support linkage is folded onto the mounting plane.

In order to stabilize the golf bag when placed directly on the ground (without being attached to a golf trolley), the support linkage can be folded down from the mounting plane to or up to a limit stop, the support linkage and the mounting plane then forming a triangle. According to a preferred embodiment, the formed triangle is an acute triangle with which a particularly high stability can be achieved.

In this position of the support linkage, the basis bag can safely be placed on a plane, e.g. the ground of a golf course. The angle between the support linkage and the mounting plane is preferably in a range between 20° and 50° when the linkage support is folded down to the limit stop. With the angle in this range, the basis bag can be placed safely in a stable position on the ground. Typically, the basis bag is then inclined with respect to the ground plane by an angle of about 40° to 70°.

An important aspect of the invention is that support linkage is disposed on the mounting plane of the basis back when the support linkage is folded onto the mounting plane. In this position, the free ends of the support linkage of the basis bag may engage a main frame of a golf trolley supporting the basis bag. The engagement of the free ends of the support linkage with a specifically adapted part of the trolley's main frame leads to a significant stabilization of the basis bag with the attached golf trolley. This will be described more in detail later and with respect to the drawings. The support of the basis bag on the main frame of the golf trolley particularly prevents the bag from twisting around the mounting surface and allow the basis bag and golf trolley, which are attached to each other, to be transported together, for example.

According to a preferred embodiment of the invention, the support linkage may comprises two support bars, each pivotally mounted to the mounting plane. Each of the two support bars is extending along one of the two longer sides of the mounting plane such that the mounting support is positioned between the two support bars when the support bars, and therewith the support linkage, are folded onto the mounting plane. In this embodiment, the support bars are preferably mounted such to the mounting plane that the support bars are aligned in parallel to each other when the support bars, and therewith the support linkage, are folded onto the mounting plane. When the support bars are folded down from the mounting plane, the support bars preferably may be arranged angled to one another.

In this position, i.e. with the support bars folded down from the mounting plane, the free ends of both support bars have according to an advantageous of the proposal a larger distance than the opposite ends of the support bars pivotally mounted to the mounting plane. This further increases stability when the basis bag is placed on the ground. According to a preferred arrangement, the distance between the free ends in this position is about 2 to 6 times, even more preferably 3 to 5 times, of the distance of the opposite ends of the support bars.

To simplify the operation of the support linkage there may be provided, according to one aspect of the proposal, an actuation mechanism for actuation the support linkage is provided having a pedal mounted on the lower base plane and connected to a pressure rod acting on the support linkage. The pressure rod transfers the support linkage from the position folded onto the mounting plane to the position folded down from the mounting plane upon actuation of the pedal. The pedal may be actuated by foot or by inclining the basis bag placed on the ground towards the pedal, thereby moving the pedal up to the body of the basis bag.

More in detail, the pressure rod may be connected to a roller carrier at the other end opposed to the pedal such that the roller carrier is moving along the support bars upon actuation of the pedal, and therewith of the pressure rod. The roller carrier has at least two rollers, one disposed in front of each of the support bars, wherein each of the support bars has a guidance element formed and disposed such that the rollers abut against the guidance element upon actuation of the pedal thereby folding down the support rods from the mounting plane.

The guidance element is preferably mounted on the support rod and has a rounded abutting surface directed towards the mounting plane, wherein the distance between the abutting surface and the mounting plane is decreasing along the support bar in the direction towards the end of the support bar pivotally mounted to the mounting plane. Thus, by moving the roller carrier towards the upper plane of the basis bag or, equally and in other words towards the mounting point of the support bars on the mounting plane, the rollers are abutting against the abutting surface of the guidance element and folding the support bars down from the mounting plane.

Further advantageous features or aspects of the support linkage and its actuation mechanism will be described later in connection with an exemplary embodiment of the golf bag according to the invention shown in the drawing and/or can be seen from the individual figures. The expert will combine one or more of these features with the all features described above or a selection thereof, depending on their purpose and their advantageous.

According to an advantageous embodiment, the free end of the support linkage, e.g. the free end of each of the support bars, has a conical tip. A fixing mechanism may be provided on the mounting plane to fix and secure the conical tip of the support linkage, e.g. the free end of each of the support bars, when the support linkage is folded onto the mounting plane.

To this aim, the fixing mechanism may comprise a holder having two fixing openings to receive the conical tips of the support bars, the holder being slidably held on the mounting plane. By sliding the holder along an axis directed in parallel to a centerline of the mounting plane (i.e. along its longer extension), the edge of the openings engage or unblock (depending on the sliding position of the holder) the conical tip of the support bars. The conical tip of the support bars may comprise flange projection for engagement with the edge of the opening in the sildable holder.

Further, when mounted to the golf trolley, the conical tips of the support bars, may engage with holding openings in the main frame of the golf trolley to secure the basis bag against rotation around the bag mount of the golf trolley. The conical tips of the support bars, when inserted in the holding openings in the main frame of the trolley, absorb pivoting forces of the basis bag relative to the trolley and thus also relieve the mounting support on the mounting plane as well as the golf bag mount on the trolley, which then no longer have to absorb these pivoting forces.

Accordingly, the golf bag according to the invention may comprise a golf trolley attachable to the golf bag, the golf trolley comprising a main frame for mounting the basis bag and a handle portion, which is pivot-mounted to the main frame at a handle joint.

Further, a first main wheel is attached to a first main wheel mount of the trolley, wherein the first main wheel mount is pivotably attached to the main frame, pivotable about a swivel axis. The first main wheel mount is displaceable parallel to the swivel axis. The handle portion is mechanically coupled to the first main wheel mount such that folding the handle portion at the handle joint drives the first main wheel mount to rotate about the swivel axis and to move linearly along the swivel axis.

Correspondingly, a second main wheel is attached to a second main wheel mount of the trolley, wherein the second main wheel mount is pivotably attached to the main frame. The second main wheel mount is also displaceable parallel to the swivel axis. The handle portion is mechanically coupled to the second main wheel mount such that folding the handle portion at the handle joint drives the second main wheel mount to rotate about the swivel axis and to move linearly along the swivel axis together with the first main wheel mount.

The first main wheel mount and second main wheel mount move along the swivel axis in opposite directions.

This mechanism allows the golf trolley to be folded up while the basis bag (and optionally further modules as described later in detail) are attached to the golf trolley. With the golf trolley folded up, the combined golf bag and golf trolley form a quite small and compact entity that can be transported as one entity without requiring plenty of transportation space. Further, by simply unfolding the trolley, the golf bag with the golf trolley can be immediately used without a complicated and troublesome reassembly.

Another aspect of the proposal according to the invention is a modularity of the golf bag to adapt the golf bag variably to different needs. One proposal regarding modularity is that the basis bag has a (or at least one) module mount at the elongated side plane opposite to the mounting plane, labeled as the front plane, for attaching further modules of the golf bag, such as a carrying strap or a presenting module for further golf clubs. This module mount comprises a receiving shaft with a locking device in which a fastening buckle can be received and detachably locked, and a tray for inserting a retaining hook. The tray preferably comprises a recess for holding the retaining hook. The golf bag and/or any module of the golf bag may have further of such module mounts.

Preferably, the receiving shaft is positioned at, or adjacent to, the upper base plane of the basis bag, and the tray is positioned at, or adjacent to, the lower base plane of the basis bag. The receiving shaft and the tray may be positioned in the center of the front plane with respect to the smaller extension (smaller side) of the front plane according to a preferred embodiment to ensure an even weight distribution.

Further, the locking device at the receiving shaft may comprise a locking pin and a release button. The fastening buckle according to the invention comprises an opening for receiving the locking pin upon insertion of the fastening buckle into the receiving shaft. By pressing the release button, the locking pin is moved out of the opening of the fastening buckle, thereby unblocking the fastening buckle in the receiving shaft.

As an additional module of the golf bag in a preferred embodiment, the golf bag may comprise a presentation module attachable to the basis bag for carrying further golf clubs, in particular using the module mount on front plane of the basis bag. However, according to the invention, the presentation module may also be differently attached to the basis bag in line with the proposal. In the following, the presentation module is also referred to as the presenter with synonymous meaning.

The presentation module proposed with this embodiment comprises a supporting structure with a support rod extending longitudinally along the presentation module. The upper and lower ends of the support rod are held on the front plane of the basis bag, as already mentioned preferably with a fastening buckle at the upper end of the support rod and a retaining hook at the lower end of the support rod, thus interacting with the module mount on the front plane of the basis bag.

The presentation module further comprises a bearing at the upper and lower ends of the support rod, the bearing supporting wing axles of the presentation module, and two wings held at the supporting structure by the wing axles such that the wings can be rotated around the wing axles to open and close the presentation module. Each of the two wings comprise in the upper side of the wing several , in particular circular, openings for inserting the stems of golf clubs. The lower side of the wings are preferably closed. The stems of the golf clubs are hold in tubes integrated in the wings of the presenter and extending from the, in particular circular, openings, similar to the basis bag.

Using the presentation module attached to the basis bag, the golf bag according to the invention can carry a significantly larger number of golf clubs. As the wings of the presentation module can be opened in the sense that they can be rotated around the wing axles, each holding one wing, the golf clubs carried in each of the wings as well as the golf clubs carried in the basis bag can be more easily seen (and/or selected) and pulled out or inserted back by the user.

In line with the proposal, the two wings may comprise a locking mechanism for fixing the two wings in a closed position adjacent to each other, wherein the locking mechanism is preferably positioned for each wing at a wing front side opposite a wing back side attached wing axle.

In an embodiment described here by way of example, the first wing of the two wings has a locking bolt in a locking tray, and a release button for actuating the locking bolt, moving the locking from a locking position to a releasing position. A second wing of the two wings has a locking pin for engaging and securing the locking bolt in the locking pin, the locking bolt being in a locking position. By pressing the release button according to this example, the locking of two wings is released, and the wings can be rotated around the respective wing axles. This is a preferred example of the locking mechanism. However, the locking mechanism may also be realized in another way by the one skilled in the art without deferring from the proposed invention.

To this aim, the locking pin may comprise an opening to surround (and thus fixing) the locking bolt in the opening of the locking pin in its locking position, and to unblock the locking bolt in the opening of the locking pin in its releasing position. For engaging the locking bolt, the locking pin may be configured to enter the locking tray when the two wings are in a closed position, i.e. rotated around the respective wing axles such that one side of the first wing and one side of the second wing are aligned in parallel an abutting against each other.

This proposed locking mechanism ensures that the two wings of the presenter can be closed and safely secured when the user carries the golf bag, for example.

According to a further development, the locking mechanism may comprise a first pair of a locking bolt in a locking tray and a locking pin at the upper side of the two wings and a second pair of a locking bolt in a locking tray and a locking pin at the lower side of the two wings. The release button and the locking bolts of the first and the second pairs in the first wing are then preferably mechanically connected by a pressure rod which transfers pressing of the release button to both locking bolts. In this way, both pairs of locking bolt and locking tray can be released with the one and same release button to open the two wings of the presenter.

Preferably, the second wing of the presentation module may have a (or at least one) module mount at the wing front side for attaching further modules of the golf bag such as a carrying strap. Such module mount comprises e.g. a receiving shaft with a locking device in which a fastening buckle can be received and detachably locked, and a tray for inserting a retaining hook.

In line with the invention, the module mount of the presentation module has according to a preferred embodiment the identical features as the module mount of the basis bag. This has the advantage that the same further modules, such as a carrying strap, can be attached also to the presentation module.

According to a further aspect of the proposal according to the invention, the golf bag may comprise one or more module bags that are attachable to the basis bag and/or another module of the golf bag, such as in particular the presenter or the golf trolley. In line with the invention, the basis bag and/or the other module of the golf bag, e.g. the presenter or the golf trolley, comprises a (or at least one) bag mount for engaging a guide element provided at the module bag. Accordingly, the module bag might have a corresponding guide element for engaging the bag mount. This ensures that the module bags can be securely fixed at other modules (basis bag, presenter, golf trolley) of the golf bag. It is possible to provide module bags in different sizes and/or designs to be used with the golf bag in modular manner.

According to a proposed embodiment, the bag mount may have a or at least one guide nut, preferably two guide nuts disposed in parallel, the guide nut being disposed such at the golf bag, in particular at the basis bag and/or the other module, that the guide element of the module bag is insertable into the guide nuts. In this embodiment, the guide element of the module bag may have a or at least one protruding guide axis, preferably two protruding guide axis disposed in parallel, the form of which is in particular adapted to the form of the guide nuts in the bag mount. On the guide axis, a movable clamping sleeve is hold to secure the module bags in the bag mount. For example, the clamping sleeve may be positioned in the middle of the guide axis. The invention is however not limited to this specific position of the clamping sleeve.

The clamping sleeves held on the guide axis wedges on the guide axis when simply trying to pull out or remove the module bags. The guide axis of the module bags can only be pulled out of the guide nut if the module bag is simultaneously pressed against bag mount, i.e. pressed with 90° degrees to the sliding direction. The clamping sleeve thus swivels parallel to the guide axis and stops wedging in the guide nut.

Additional advantages, features and possibilities of use of the present invention also result from the following description of exemplary embodiments and the drawing. Thereby, all described and/or figuratively shown features by themselves or in any combination make up the subject-matter of the present invention, even independent of their summary in the claims or their references.
- Fig. 1:: shows a preferred embodiment of the golf bag with a basis bag and the optional modules golf trolley, presenting module and several module bags in a three dimensional view;
- Fig. 2:: shows the golf bag according to Fig. 1 in another three dimensional view;
- Fig. 3:: shows the golf bag according to Fig. 1 without a third trolley wheel in a three dimensional view;
- Fig. 4:: shows the golf bag according to Fig. 1 without module bags in a three dimensional view;
- Fig. 5:: shows the golf bag according to Fig. 1 with a golf trolley folded-up in a side view:
- Fig. 6: shows the golf bag according to Fig. 5 in a three dimensional view;
- Fig. 7: shows the basis bag of the golf bag according to Fig. 1 without the golf trolley, the presenter and the module bags in a three dimensional view;
- Fig. 8:: shows the basis bag of the golf bag according to Fig. 7 with the support linkage folded away from the mounting plane of the basis bag in a three dimensional view;
- Fig. 9:: shows the basis bag and the presenter of the golf bag according for Fig. 1 without further modules in a three dimensional view;
- Fig. 10;: shows the basis bag and the presenter of the golf bag according for Fig. 9 without further modules in another three dimensional view;
- Fig. 11:: shows the free end of the support linkage of the basis bag in detail of Fig. 10 with fixed support rods;
- Fig. 12:: shows the free end of the support linkage of the basis bag in detail of Fig. 10 with free support rods;
- Fig. 13:: shows the mounting of the support linkage to the mounting plane of the basis bag in detail of Fig. 10;
- Fig. 14:: shows the end of the support linkage immersed into openings of the golf trolley main frame with the basis bag mounted at the golf trolley;
- Fig. 15:: shows a detail view of the basis bag and the presenter with the wings of the presenter closed;
- Fig. 16:: shows a detail view of the basis bag and the presenter at the upper end of the presenter with the wings of the presenter open;
- Fig. 17:: shows a detail view of the basis bag and the presenter at the lower end of the presenter with the wings of the presenter open;
- Fig. 18:: shows a detail view of the presenter with a bag mount for attaching a module bag;
- Fig. 19:: shows the view according to Fig. 18 with a guide element of the module bags detached from the guide nuts in the presenter of the golf bag;
- Fig. 20: shows the guide element of the bag mount in detail;
- Fig. 21: a detail view of a module bag with the guide element;
The golf bag 1 shown in the drawings is a preferred embodiment of the proposed golf bag 1. In this embodiment, many different features are shown by way of example. However, the one skilled in the art will recognize that not all of the features of the modular golf bag are mandatory for the invention. Therefore, the one skilled in the art may omit, chose and/or amend some of the features shown in embodiment explained in the drawings in any suited combination without leaving the subject matter of the invention.

The proposed golf bag 1 comprises a basis bag 100 which can be supplemented by various other modules. All of the modules can be attached and fixed at the basis bag 100 and/or at each other. In is an important feature of the invention that the modules of the golf bag can flexibly be varied by the user dependent on her or his respective wishes or dependent on the circumstances of use.

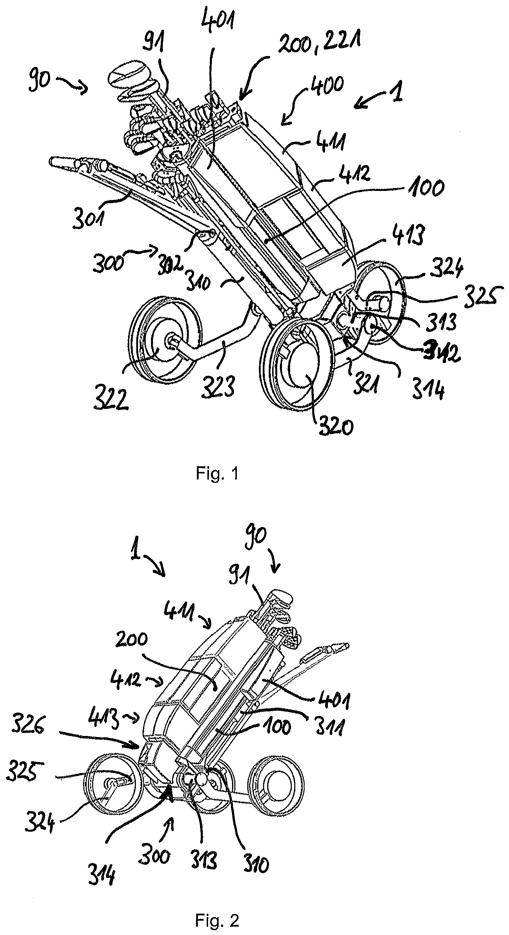

The golf bag 1 shown in Figures 1 to 3 comprises a rigid basis bag 100 as the basis module and as optional modules a presenter 200 (presentation module 200) for carrying more golf clubs 90 and a golf trolley 300. Both, the presenter 200 and the golf trolley 300 are attached to the basis bag 100. As further modules, several different types of module bags 400 are attached to the basis bag 100 and the presenter 200. By way of example only, module bags 401 are attached to the basis bag 100 and module bags 411, 412, 413 are attached to the presenter 200.

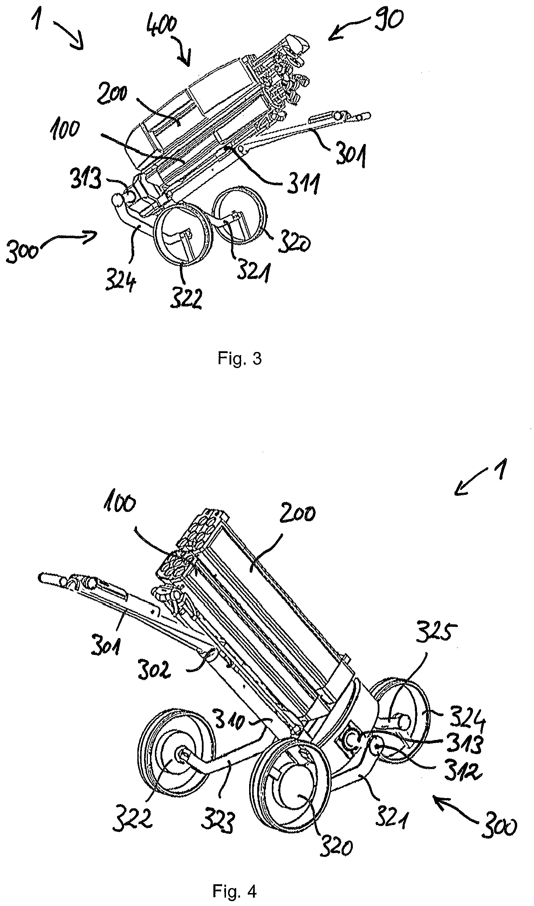

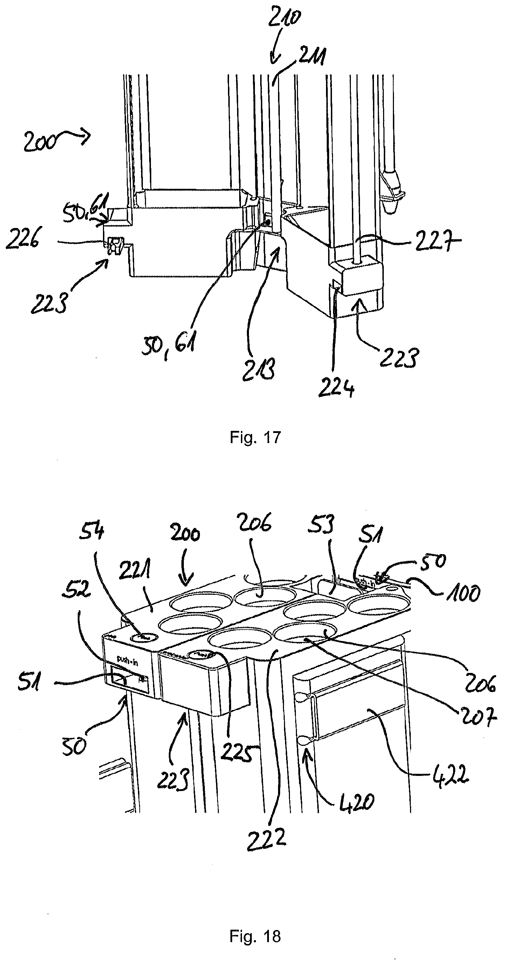

Figure 4 shows the golf bag 1 with basis bag 100, presenter 200 and golf trolley 300 without the module bags 400. An exemplary possibility for attaching and removing the module bags 400 will be described later with reference to the Figures 18 to 21.

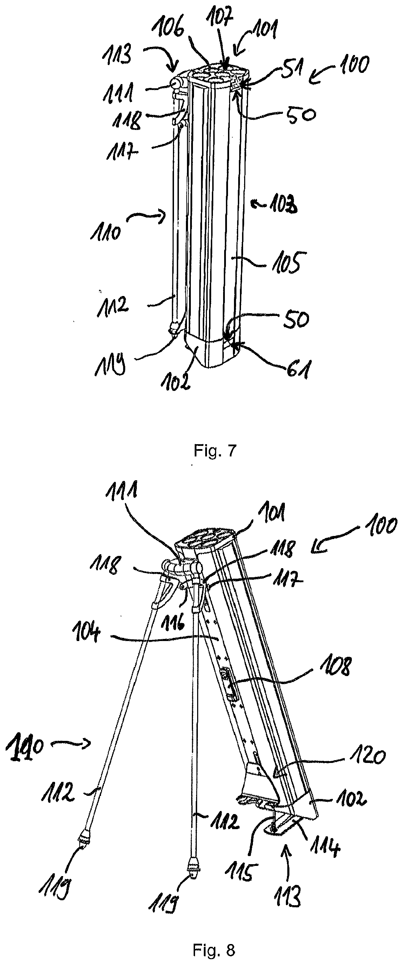

The optional golf trolley 300 comprises a golf bag mount 311 (best seen in Figures 2 and 3) engaging with a mounting support 108 (best seen in Figure 8) of the basis bag 100. The golf bag mount 311 is positioned at a main frame 310 of the golf trolley 300 for mounting the basis bag 100.

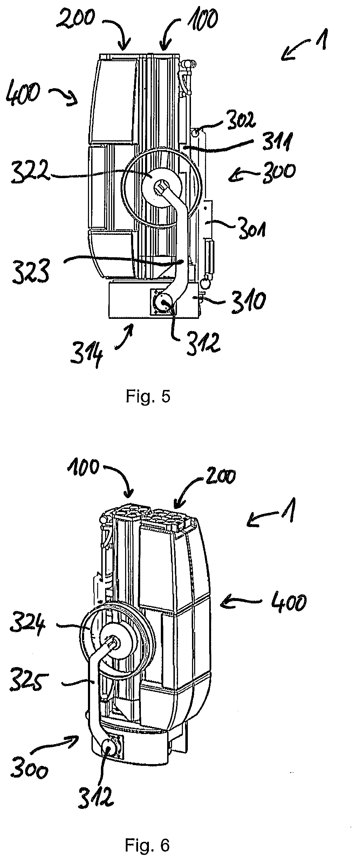

The golf trolley 300 is foldable between an operational mode in which the golf trolley 300 can be used to hold a golf bag 1 with golf clubs 90 (see Figures 1 to 4, for example) and a transport mode in which the golf trolley 300 is folded-up for transportation see Figures 5 and 6, for example). To this aim, a handle portion 301 is pivotably attached to the main frame 310 at a handle joint 302. When the golf trolley is folded-up, handle portion 301 is swiveled towards the main frame 310 (see Figure 5 for example).

A first main wheel 320 is attached to a first main wheel mount 321, wherein the first main wheel mount 321 is pivotably attached to the main frame 310, pivotable about a swivel axis 312. Further, the first main wheel mount 321 is displaceable parallel to the swivel axis 312 by means of a telescopic rod 313 hold in the main frame 310. In the same way, a second main wheel 322 is attached to a second main wheel mount 323, wherein the second main wheel mount 323 is pivotably attached to the main frame 310 by the telescopic rod 313, wherein the second main wheel mount 323 is also displaceable parallel to the swivel axis 312 common for the first and the second main wheel 320, 322.

For folding up the golf trolley, the handle portion 301 is mechanically coupled to the first main wheel mount 321 and the second main wheel mount 323 such that folding or swiveling the handle portion 301 at the handle joint 302 drives the first main wheel mount 321 and the second main wheel mount 323 to rotate about the swivel axis 312 and to move linearly along the swivel axis 312 together. This is achieved by a spur gear and linear drive lever mechanism 314 of the main frame 310, the spur gear and linear drive lever mechanism 314 being mechanically coupled to the handle portion 301 and actuated by swiveling the handle portion 301 around the handle joint 302.

The first main wheel mount 321 and the second main wheel mount 323 move along the swivel axis 312 in opposite directions when folding up the golf trolley 300. The telescopic rod 313 is configured such that it pulls both, the first and second main wheel mount 321, 323 with the respective first and second main wheels 320, 322 closer towards the main frame 310 of the golf trolley 300.

At the same time, the first main wheel mount 321 and the second main wheel mount 323 rotate around the swivel axis 312 such towards the golf bag mount 311 that the first and second main wheel 320, 322 are positioned (in particular with its center) adjacent to the basis bag 100. This position is depicted in Figures 5 and 6.

This results in a golf bag 1 with all the modules basis bag 100, folded-up presenter 200, golf trolley 300 and module bags 400 attached which is extremely compact and can nevertheless be transported in one (assembled) piece.

As shown in the example, the module bags 400 are preferably designed such that they leave enough free space for the first and second main wheels 320, 322 when the golf trolley 300 is folded-up. This is in particular evident from Figure 6.

Figure 4 shows the golf bag 1 with the basis bag 100, the presentation module 200 and the trolley 300, but without any module bags 400

The golf trolley 300 additionally has - as a third wheel - a support wheel 324 with a support wheel mount 325 (attached to the main frame 310) which allows the golf trolley 300 to stand safely on the ground while still being movable. The golf trolley 300 further comprises a support wheel release mechanism 326 (see Figure 2) to disassemble the support wheel 324 and the support wheel mount 325 from main frame 310. Figures 5 and 6 show the golf bag 1 with the golf trolley 300 folded-up and the support wheel 324 disassembled. However, the golf trolley 300 may also be folded-up with the support wheel 324 attached to the main frame 310.

Figure 3 indicates that the golf bag 1 can be pulled behind the user also with the support wheel 324 disassembled.

The main or basic module of the golf bag 1 is the rigid basis bag 100 which is described in the following more in detail with reference to the Figures 7 and 8. The basis bag 100 has an upper base plane 101, a lower base plane 102 and elongated side planes 103. The lower base plane 102 is closed and the upper base plane 101 has several circular openings 106 for inserting the stems 91 of the golf clubs 90. This stems 91 of the golf clubs 90 are then guided in tubes 107 extending from the circular openings 106 inside the basis bag 100.

One of the side planes 103, labeled as the mounting plane 104, has the mounting support 108 on its surface for engaging the golf bag mount 311 of the golf trolley 300 thereby attaching the basis bag 100 to the golf trolley 300. Preferably, the mounting support 108 is positioned in the center of the mounting plane 104, at least with respect to the direction of the smaller side (horizontal in Figure 8) of the mounting plane 104. In the shown example, it is also centered respect to the direction of the longer side (vertical in Figure 8) of the mounting plane 104.

The basis bag 100 further comprises a support linkage 110 for supporting the basis bag 100 on the floor so that it does not fall over when it is not fixed in the golf trolley 300.

The support linkage 110 is pivotally mounted to the mounting plane 104 at the upper end of the mounting plane 104 adjacent to the upper base plane 101 in a support linkage joint 111. If the support linkage 110 is not rotated around the linkage joint 111 (see Figure 7), the support linkage 110 is extending along the longer side of the mounting plane 104.

The support linkage 100 can be folded down from the mounting plane 104 up to a limit stop. The support linkage 104 and the mounting plane 108 then form a triangle as shown in Figure 8.

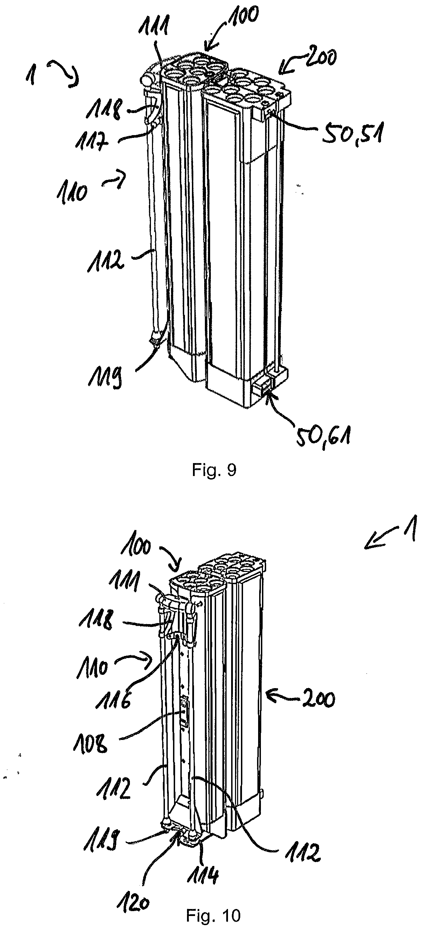

More specifically, the support linkage 110 comprises two support bars 112, each of which pivotally mounted to the mounting plane 104 at the support linkage joint 111. Both support bars 112 extend along the longer sides of the mounting plane 104, each at one of the both sides such that the mounting support 108 is positioned between the two support bars 112 when the support bars 112 are folded onto the mounting plane 104 (see Figure 10, for example). The support bars 112 are mounted such in the support linkage joint 111 to the mounting plane 104 that the support bars 112 are aligned in parallel to each other when the support bars 112 are folded onto the mounting plane 104. If, however, the support bars 112 are folded down from the mounting plane (see Figure 8 for example), the two support bars 112 are arranged angled to one another.

To facilitate moving the support bars 112, the basis bag 100 has an actuation mechanism 113 for actuating the support linkage 110 (or the support bars 112, respectively). The actuation mechanism has a pedal 114 mounted on the lower base plane 102 and connected to a pressure rod 115 acting on the support linkage 110, the pressure rod 115 transferring the support linkage 110 (or the support bars 112, respectively) from the position folded onto the mounting plane 104 to the position folded down from the mounting plane 104 upon actuation of the pedal 114.

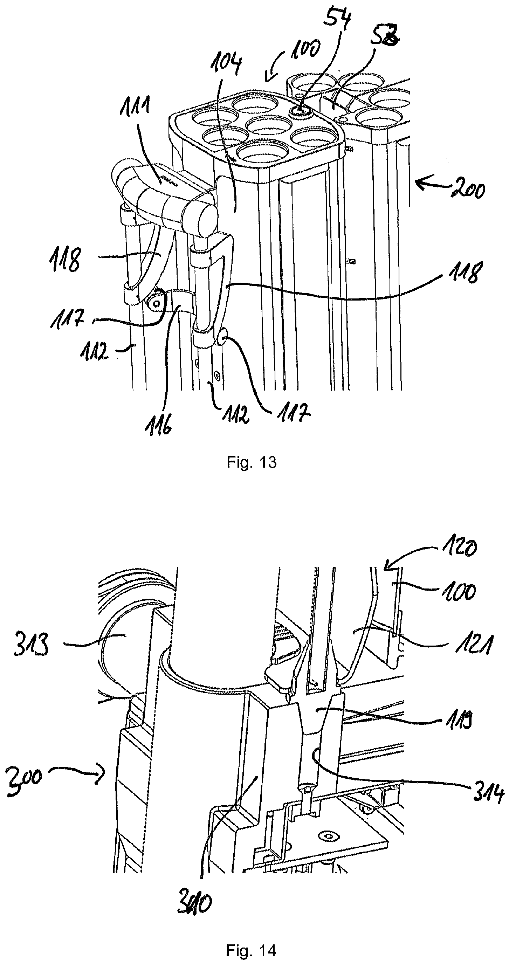

To this aim, the pressure rod 115 is connected to a roller carrier 116 at the other end of the pressure rod 115, i.e. at the end opposed to the pedal 114. Thus, the roller carrier 116 is moving along the support bars 112 upon actuation of the pedal 114. As the roller carrier 116 (shown in detail in Figure 13) has two rollers 117, one disposed in front of each of the support bars 112, and as each of the support bars 112 has a guidance element 118 formed and disposed such that the rollers 117 abut against the guidance element 118 upon actuation of the pedal 114, the support rods 112 fold down from the mounting plane 104 when the pedal is actuated (to the position shown in Figure 8, for example). A reset mechanism may be provided to return the support bars 112 to the starting position (folded onto the mounting plane 104, as shown in Figure 10, for example) or to support returning to this position, when the pedal 7 is no longer pressed and the support bars 112 are not supported on the ground. For this purpose, for example, a torsion spring can be accommodated in the support linkage joint 111.

The free ends of the support bars 112 have a conical tip 119. On the mounting plane, a fixing mechanism 120 is provided to fix and secure the conical tip 119 of the support bars 112 when the support bars 112 are in the position folded onto the mounting plane 104.

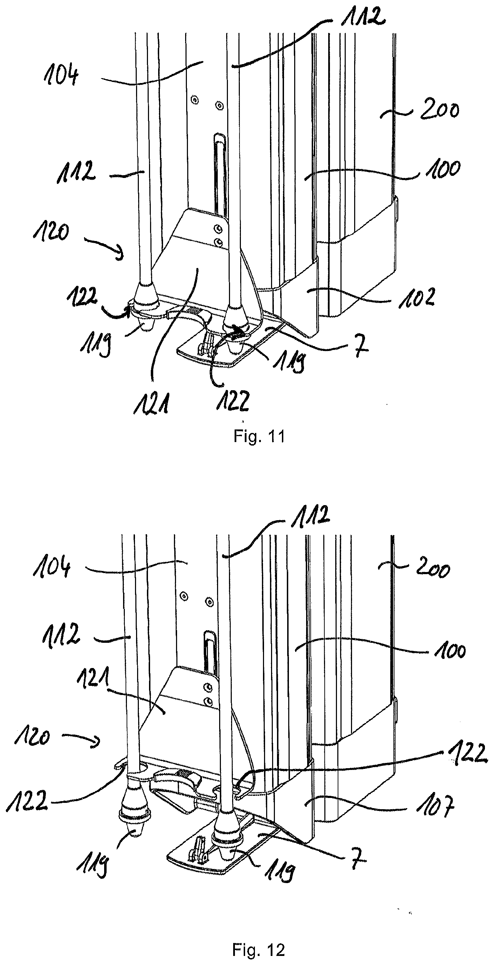

As evident in detail from the Figures 11 and 12, the fixing mechanism 120 has a holder 121 having two fixing openings122 to receive the conical tips 119 of the support bars 122, when the holder 121 is slit down on the mounting plane 104. The edge of the openings 122 engage (Figure 11) or unblock (Figure 12) the conical tip 119 of the support bars 112.

When the basis bag 100 is attached to the golf trolley 300, the conical tips 119 of the support bars 112 engage with holding openings 314 in the main frame 310 of the golf trolley 300 to secure the basis bag 100 against rotation around the golf bag mount 311 of the golf trolley 300. At the same time, the conical tips 119 of the support bars 112 may be fixed in the fixing mechanism 120 of the basis bag 100, e.g. by the holder 121 as described before.

The conical tips 119 of the support bars 112, when inserted in the holding openings 314 in the main frame 310 of the golf trolley 300, absorb pivoting forces of the basis bag 100 relative to the trolley 300 and thus also relieve the mounting support 108 of the basis bag 100 on the mounting plane 104 as well as the golf bag mount 311 of the trolley 300.

As shown in Figure 7, the basis bag 100 has a module mount 50 at the elongated side plane 103 opposite to the mounting plane 104, labeled as the front plane 105. The module mount 50 comprises at the upper end of the front plane 105 a receiving shaft 51 with a locking device 52 (visible in an identical module mount at the presenter 200 in Figure 18, which in the rear also shows the module mount 50 of the basis bag 100 with its receiving shaft 51). In the locking device 52, a fastening buckle 53 of another module to be fixed (in Figure 18 of the presenter 200), can be received and detachably locked, using e.g. a release button 54 acting on the locking device 52 in the receiving shaft 51 upon pressing the release button 54. At the lower end of the front plane 105, the module mount 50 comprises a tray 61 for inserting a retaining hook of the of the other module.

The module mount 50 of the basis bag 100 is used in the example of the golf bag 1 shown to attach the presentation module 200 (presenter 200) at the basis bag 100. This is evident from the Figures 9 und 10 showing the basis bag 100 und the presenter 200 attached to each other without the golf trolley 300 in two different three dimensional views.

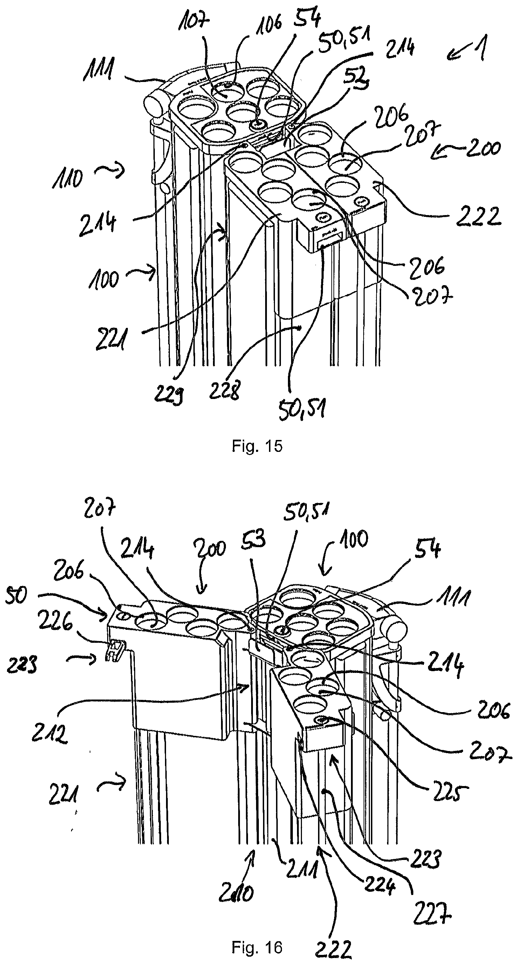

The presenter 200 carries further golf clubs 90. The presenter 200 will be described more in detail in the following with respect to the Figures 15 to 17. The presenter 200 has a supporting structure 210 with a support rod 211 extending longitudinally along the presenter 200. The support rod 211 is held at its upper and lower ends on the front plane 105 of the basis bag 100 using the already described module mount 50 (see Figures 16 and 17). The supporting structure further has a bearing 212 at the upper end and a bearing 213 at lower end of the support rod 211, the bearings 212, 213 supporting wing axles 214 of the presentation module 200.

Two wings 221, 222 are held at the supporting structure 210 by one wing axle 214 each in such a way that the wings 221, 222 can be rotated around the wing axles 214 to open and close the presentation module 200. Figure 15 shows the closed presentation module 200 with the closed wings 221, 222 abutting against each other, and Figure 16 shows the opened presentation module 200 with the wings 221, 222 rotated away from each other around the respective wing axle 214. In this position with the opened wings 221, 222, golf clubs 90 in the presenter 200 can be better seen and taken from the presenter 200, i.e. the presenter 200 presents more golf clubs 90 in a clearer way (see also Figure 1).

For carrying the golf clubs 90, each of the two wings 221, 222 comprise in the upper side of the wing 221, 222 several circular openings 206 for inserting the stems 91 of golf clubs 90, the lower side of the wings 221, 222 being closed. The stems 91 of the golf clubs 90 are then guided in tubes 207 extending form the circular openings 206 inside the wings 221, 222 of the presenter 200.

In order to secure the two wings 221, 222 in the closed position, the two wings 221, 222 comprise a locking mechanism 223 for fixing the two wings 221, 222 in the closed position adjacent to each other. The locking mechanism is positioned for each wing 221, 222 at a wing front side 228 opposite a wing back side 229, the wing back side 229 being attached to the wing axle 214.

The first wing 22 of the two wings 221, 222 has a locking bolt in a locking tray 224 and a release button 225 for actuating the locking bolt from a locking position to a releasing position. The second wing 221 of the two wings 221, 222 has a locking pin 226 for engaging and securing the locking bolt in the locking pin 226 in the locking position of the locking bolt. The locking bolt in the locking tray is not visible in the drawings.

In the shown embodiment by way of example, the locking mechanism 223 comprises a first pair of a locking bolt in a locking tray 224 and a locking pin 226 at the upper side of the two wings 222, 221 (see Figure 16) and a second pair of a locking bolt in a locking tray 224 and a locking pin 226 at the lower side of the two wings 222, 221 (see Figure 17). Accordingly, there are two interlocking points of the wings 221, 222 in the closed position.

Preferably, the release button 225 and the locking bolts of the first and the second pairs of the locking mechanism 223 in the first wing 222 are connected by a pressure rod 227 which transfers pressing of the release button 225 to both locking bolts in the respective locking trays 224.

As evident from Figures 9 and 15, for example, the second wing 221 of the presenter 200 has a module mount 50 at the wing front side 228. This module mount 50 of the presenter 200 corresponds to the module mount 50 of the basis bag 100 already described. It will not be described in detail here again.

The advantage of this identical module mount 50 at the basis bag 100 and the presenter 200 is that further modules (even if not described in this description) may be variably attached to the basis bag 100 and/or the presenter 200 of the golf bag 1, according to the actual needs of the user. This enhances the modularity of the proposed golf bag 1.

As already mentioned with reference to the Figures 1 to 6, different module bags 400 can be attached to several modules of the golf bag 1. In the example shown, module bags 401 are attachable to the basis bag 100 and module bags 411, 412, 413 are attachable to the presenter 200. For attaching the module bags 400, there is provided a bag mount 420 explained more in detail referring to the Figures 18 to 21.

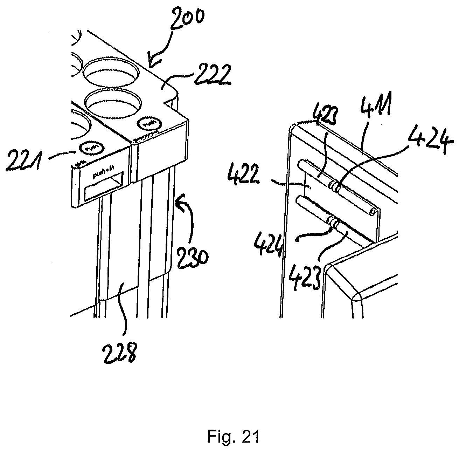

The bag mount 420 is provided at a module of the golf bag 1 to which a module bag 400 is to be attached. In the example shown in Figure 21, a module bag 411 shall be attached to a side surface 230 of the presenter 200. At this side surface 230 of the presenter 200, the bag mount 420 is provided.

The bag mount 420 has two parallel guide nuts 421 disposed such at the side surface 230 of the presenter 200 that a guide element 422 of the module bag 411 can engage with the bag mount 420. To this aim, the guide element 422 has to protruding guide axis 423 which can be inserted into the guide nuts 421 of the bag mount 420.

In order to secure the module bag 411 with the guide element 422 in the bag mount 420, the each guide axis 423 holds a movable clamping sleeve 424 in a recessed area 425 of the guide axis 423, preferably in the middle of the or each guide axis 423.

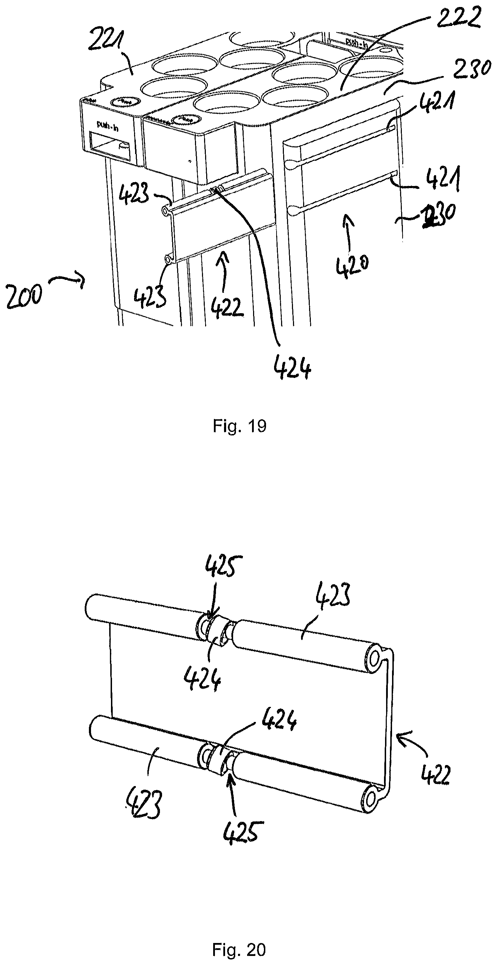

As the clamping sleeve 424 is held moveable on the guide axis 423, as indicated in Figure 20, the clamping sleeve 424 on the guide axis 423 wedges in the guide nut 421 when simply trying to pull out or remove the mounted module bag 411. The guide axis 423 of the guide element 422 at module bag 411 can only be pulled out of the guide nut 421 if the module bag 411 (and with the module bag 411 the guide element 422) is simultaneously pressed against bag mount 420, i.e. pressed with 90° degrees to the sliding direction in the direction of the bag mount 420. The clamping sleeve 424 thus swivels parallel to the guide axis 423 and stops wedging in the guide nut 421.

### List of reference numerals:

- 1: golf bag
- 50: module mount
- 51: receiving shaft
- 52: locking device
- 53: fastening buckle
- 54: release button
- 61: tray for inserting a retaining hook

- 90: golf club
- 91: stem of the golf club

- 100: rigid basis bag (also referred to as "basis bag")
- 101: upper base plane
- 102: lower base plane
- 103: elongated side planes
- 104: mounting plane
- 105: front plane
- 106: in particular circular opening
- 107: tubes
- 108: mounting support
- 110: support linkage
- 111: support linkage joint
- 112: support bar
- 113: actuation mechanism
- 114: pedal
- 115: pressure rod

- 116: roller carrier
- 117: roller
- 118: guidance element
- 119: conical tip
- 120: fixing mechanism
- 121: holder
- 122: fixing opening

- 200: presentation module (also referred to as "presenter")
- 206: in particular circular openings
- 207: tubes

- 210: supporting structure
- 211: support rod
- 212: bearing at the upper end of the support structure
- 213: bearing at the lower end of the support structure
- 214: wing axle

- 221: second wing
- 222: first wing
- 223: locking mechanism
- 224: locking tray
- 225: release button
- 226: locking pin
- 227: pressure rod
- 228: wing front side
- 229: wing back side
- 230: side surface

- 300: golf trolley
- 301: handle portion
- 302: handle joint
- 310: mainframe
- 311: golf bag mount
- 312: swivel axis
- 313: telescopic rod
- 314: holding opening
- 320: first main wheel
- 321: first main wheel mount
- 322: second main wheel
- 323: second main wheel mount
- 324: support wheel
- 325: support wheel mount
- 326: support wheel release mechanism

- 400: module bags
- 401: module bag for basis bag
- 411, 412, 413: module bag for presenter
- 420: bag mount
- 421: guide nut
- 422: guide element
- 423: guide axis
- 424: movable clamping sleeve
- 425: recessed area

## Claims

1. Golf bag having
a rigid basis bag (100) with an upper base plane (101), a lower base plane (102) and elongated side planes (103), wherein the lower base plane (102) is closed and the upper base plane (103) has several openings (106) for inserting the stems (91) of golf clubs (90),
wherein one of the side planes (103), labeled as the mounting plane (104), has a mounting support (108) on its surface for engaging a golf bag mount (311) of a golf trolley (300) thereby attaching the basis bag (100) to the golf trolley (300),
wherein the basis bag (100) comprises a support linkage (110) pivotally mounted to the mounting plane (104) at the upper end of the mounting plane (104) adjacent to the upper base plate (101) and extending along the longer side of the mounting plane (104),
wherein the support linkage (110) can be folded down from the mounting plane (104) to a limit stop, the support linkage (110) and the mounting plane (104) then forming a triangle.

2. Golf bag according to claim 1 **characterized in that** the support linkage (110) comprises two support bars (112), each pivotally mounted to the mounting plane (104) and extending along one of the two longer sides of the mounting plane (104) such that the mounting support (108) is positioned between the two support bars (112) when the support bars (112) are folded onto the mounting plane (104),
wherein the support bars (112) are mounted such to the mounting plane (104) that the support bars (112) are aligned in parallel to each other when the support bars (112) are folded onto the mounting plane (104) and that the support bars (112) are arranged angled to one another when the support bars (112) are folded down from the mounting plane (104).

3. Golf bag according to claim 1 or 2 **characterized in that** the basis bag has an actuation mechanism (113) for actuating the support linkage (110) wherein the actuation mechanism (113) comprises a pedal (114) mounted on the lower base plane (102) and connected to a pressure rod (115) acting on the support linkage (110), the pressure rod (110) transferring the support linkage (110) from the position folded onto the mounting plane (104) to the position folded down from the mounting plane (104) upon actuation of the pedal (114).

4. Golf bag according to claim 2 and 3 **characterized in that** the pressure rod (115) is connected to a roller carrier (116) at the other end opposed to the pedal (114) such that the roller carrier (116) is moving along the support bars (112) upon actuation of the pedal (114), the roller carrier (116) having two rollers (117), one disposed in front of each of the support bars (112),
wherein each of the support bars (112) has a guidance element (118) formed and disposed such that the rollers (117) abut against the guidance element (118) upon actuation of the pedal (114) thereby folding down the support rods (112) from the mounting plane (104).

5. Golf bag according to any of the preceding claims **characterized in that** a free end of the support linkage (110) has a conical tip (119) and that a fixing mechanism (120) is provided on the mounting plane (104) to fix and secure the conical tip (119) of the support linkage (110) when the support linkage (110) is folded onto the mounting plane (104).

6. Golf bag according to any of the preceding claims **characterized in that** the golf bag (100) comprises a golf trolley (300) attachable to the golf bag (110), the golf trolley (300) comprising
- a main frame (310) for mounting the basis bag (100);
- a handle portion (301), which is pivotably attached to the main frame (310) at a handle joint (301);
- a first main wheel (320) attached to a first main wheel mount (321), wherein the first main wheel mount (321) is pivotably attached to the main frame (310), pivotable about a swivel axis (312), wherein the first main wheel mount (321) is displaceable parallel to the swivel axis (312); wherein the handle portion (301) is mechanically coupled to the first main wheel mount (321) such that folding the handle portion (301) at the handle joint (302) drives the first main wheel mount (321) to rotate about the swivel axis (312) and to move linearly along the swivel axis (312);
- a second main wheel (322) attached to a second main wheel mount (323), wherein the second main wheel mount (323) is pivotably attached to the main frame (310), wherein the second main wheel mount (323) is displaceable parallel to the swivel axis (312); wherein the handle portion (301) is mechanically coupled to the second main wheel mount (323) such that folding the handle portion (301) at the handle joint (302) drives the second main wheel mount (323) to rotate about the swivel axis (312) and to move linearly along the swivel axis (312) together with the first main wheel mount (310);
wherein the first main wheel mount (321) and second main wheel mount (323) move along the swivel axis (312) in opposite directions.

7. Golf bag according to any of the preceding claims **characterized in that** the basis bag (100) has a module mount (50) at the elongated side plane (103) opposite to the mounting plane (104), labeled as the front plane (105), wherein the module mount (50) comprises
- a receiving shaft (51) with a locking device (52) in which a fastening buckle (53) can be received and detachably locked, and
- a tray (61) for inserting a retaining hook.

8. Golf bag according to any of the preceding claims **characterized in that** the golf bag (1) comprises a presentation module (200) for carrying further golf clubs (90) attachable to the basis bag (100), the presentation module (200) comprising
- a supporting structure (210) with a support rod (211) extending longitudinally along the presentation module (200) and held on the front plane (105) of the basis bag (100) at its upper and lower ends and with a bearing (212, 213) at the upper and lower ends of the support rod (211), the bearings (212, 213) supporting wing axles (214) of the presentation module (200);
- two wings (221, 222) held at the supporting structure (210) by the wing axles (214) such that the wings (221, 222) can be rotated around the wing axles (214) to open and close the presentation module (200), wherein each of the two wings (214) comprise in the upper side of the wings (221, 222) several openings (206) for inserting the stems (91) of golf clubs (90), the lower side of the wings (221,222) being closed.

9. Golf bag according to claim 8 **characterized in that** the two wings (221, 222) comprise a locking mechanism (223) for fixing the two wings (221, 222) in a closed position adjacent to each other, wherein the locking mechanism (223) is positioned for each wing (221, 222) at a wing front side (228) opposite a wing back side (229) attached to the wing axle (214), wherein
- a first wing (222) of the two wings has a locking bolt in a locking tray (224) and a release button (225) for actuating the locking bolt from a locking position to a releasing position, and
- a second wing (221) of the two wings has a locking pin (226) for engaging and securing the locking bolt in the locking pin (226) in the locking position of the locking bolt.

10. Golf bag according to claim 9 **characterized in that** the locking mechanism (223) comprises a first pair of a locking bolt in a locking tray (224) and a locking pin (226) at the upper side of the two wings (221, 222) and a second pair of a locking bolt in a locking tray (224) and a locking pin (226) at the lower side of the two wings (221, 222), wherein the release button (225) and the locking bolts of the first and the second pairs in the first wing (222) are connected by a pressure rod (225) which transfers pressing of the release button (225) to both locking bolts.

11. Golf bag according to claim 9 or 10 **characterized in that** the second wing (221) of the presentation module (200) has a module mount (50) at the wing front side (228), wherein the module mount (50) comprises
- a receiving shaft (51) with a locking device (52) in which a fastening buckle (53) can be received and detachably locked, and
- a tray (61) for inserting a retaining hook.

12. Golf bag according to any of the preceding claims **characterized in that** the golf bag comprises at least one module bag (400, 401, 411, 412, 413) that is attachable to the basis bag (100) and/or another module (200) of the golf bag (1) by means of a bag mount (420).

13. Golf bag according to claim 12 **characterized in that** the module bag (400, 401, 411, 412, 413) comprises a guide element (422) for engaging the bag mount (420).

14. Golf bag according to claim 13 **characterized in that** the bag mount (420) has a guide nut (421), the guide nut 421) being disposed at the basis bag (100) and/or the other module (200) such that the guide element (422) of the module bag (400, 401, 411, 412, 413) is insertable into the guide nut (421).

15. Golf bag according to claim 13 or 14 **characterized in that** the guide element (422) of the module bag (400, 401, 411, 412, 413) has a protruding guide axis (423), wherein on the guide axis (423) a movable clamping sleeve (424) is held.
